Europäisches Patentamt

European Patent Office

Office européen des brevets

(11) Veröffentlichungsnummer: **0 411 343 A2**

# (12) EUROPÄISCHE PATENTANMELDUNG

(21) Anmeldenummer: 90113006.2

(22) Anmeldetag: 07.07.90

(51) Int. Cl.⁵: **B29C 43/34**, B29C 31/06, B29B 17/00

(30) Priorität: 28.07.89 DE 3925029

(43) Veröffentlichungstag der Anmeldung:
06.02.91 Patentblatt 91/06

(84) Benannte Vertragsstaaten:
AT BE CH DE DK ES FR GB GR IT LI LU NL SE

(71) Anmelder: PSR GMBH SPEZIALMASCHINEN
Stuttgarter Strasse 1-3
D-7064 Remshalden 1(DE)

(72) Erfinder: Stegmaier, Peter
Panoramastrasse 52
D-7064 Remshalden 1(DE)

(74) Vertreter: Hosenthien, Heinz, Dr. Dipl.-Ing. et al
Patentanwälte Dreiss, Hosenthien &
Fuhlendorf Gerokstrasse 6e 6
D-7000 Stuttgart 1(DE)

(54) Verfahren und Vorrichtung zur Verarbeitung von unsortierten nicht sortenreinen Kunststoffen.

(57) Bei einer Vorrichtung und einem Verfahren zur Verarbeitung von unsortierten nicht sortenreinen Kunststoffen unter Verwendung von Thermoplasten als Bindemittel und Duroplasten, die zur Rieselfähigkeit zerkleinert einem Extruder (1,3) zugeführt, unter Erwärmung innig vermischt extrudiert, in abgemessenen Portionen einem Preßwerkzeug (16) zugeführt werden, wir zur Erhöhung der Festigkeit der gefertigten Kunststoffprodukte vorgeschlagen, daß die zerkleinerten Thermoplaste und Duroplaste in einem vorgegebenen Mischungsverhältnis dem Extruder (1) in Form einer ggf. zusätzlichen Extrusions-Zahnradpumpe (3) zugeführt, dort unter Erwärmung innig gemischt unter Vakuumentgasung impulsfrei kontinuierlich durch einen beheizten Austrittskanal (5) über eine Querschnittverengung, vorzugsweise in Form einer Konusdüse (6) in laminarem Strom der Dosiervorrichtung (7) zugeführt und portioniert werden und die Portionen über eine mehrere Portionen aufnehmende und warmhaltende Zwischenspeicher-Transportvorrichtung (10) dem Preßwerkzeug (16) portionenweise zugeführt werden.

EP 0 411 343 A2

# VERFAHREN UND VORRICHTUNG ZUR VERARBEITUNG VON UNSORTIERTEN NICHT SORTENREINEN KUNSTSTOFFEN

Die Erfindung betrifft ein Verfahren und eine Vorrichtung zur Verarbeitung von unsortierten nicht sortenreinen Kunststoffen unter Verwendung von Thermoplasten als Bindemittel und Duroplasten, die zur Rieselfähigkeit zerkleinert einem Extruder zugeführt und unter Erwärmung innig vermischt extrodiert in abgemessenen Portionen einem Preßwerkzeug zugeführt werden.

Es ist bekannt, solche unsortierten nicht sortenreinen Kunststoffe. nämlich Industrie- und Gewerbeabfall-Kunststoffe und Altkunststoffe umweltschonend weiterzuverwenden (DE 36 00 174 A1). Wegen der verminderten Festigkeit dieser Kunststoffmischungen wurden nur relativ dickwandige Artikel hergestellt, um die Festigkeitsnachteile auszugleichen. Verbunden damit ist aber ein relativ hohes Produktgewicht und ein entsprechend hoher Materialverbrauch.

In Vermeidung der geschilderten Nachteile liegt der vorliegenden Erfindung die Aufgabe zugrunde, ein Verfahren und eine Vorrichtung der eingangs genannten Art zu schaffen zur Verbesserung der Festigkeitseigenschaften der hergestellten Kunststoffprodukte unter Verringerung des Materialverbrauchs des Produktgewichts bei besseren Festigkeitseigenschaften.

Zur Lösung dieser Eigenschaften sieht die Erfindung als Verfahren vor, die zerkleinerten Thermoplaste und Duroplaste in einem vorgegebenen Mischungsverhältnis dem Extruder in Form einer ggf. zusätzlichen Extrusionszahnradpumpe zuzuführen, dort unter Erwärmung innig zu vermischen, durch Vakuumentgasung kompakter zu gestalten und impulsfrei kontinuierlich durch einen beheizten Austrittskanal über eine Querschnittsverengung in Form einer Konusdüse der Dosiervorrichtung zuzuführen und portioniert über eine mehrere Portionen aufnehmende und warmhaltende Zwischenspeicher-Transportvorrichtung dem Preßwerkzeug portionenweise zuzuführen.

Insbesondere durch die Extrusions-Zahnradpumpe erfolgt eine sehr innige Vermischung der Thermoplaste und Duroplaste, wobei gleichzeitig durch die Vakuumentgasung verhindert wird, daß bei der Weiterverarbeitung des Kunststoffgemischs Gasblasen und damit verbunden Aufblähungen auftreten, die einmal die Oberflächengüte, die Maßhaltigkeit und zum anderen auch die Festigkeit der hergestellten Produkte wesentlich mindern.

Als zweckmäßige Vorrichtung zur Durchführung des Verfahrens dient als Extruder oder zusätzlich zum Extruder eine Extrusionszahnradpumpe, in deren Bereich eine Vakuumentgasung vorgeschaltet, integriert oder nachgeschaltet ist. Der Extrusionszahnradpumpe ist ein beheizter Austrittskanal und eine Konusdüse, eine Dosiereinrichtung und eine Zwischenspeicher- Transportvorrichtung nachgeordnet, wobei auch die Zwischenspeicher- Transportvorrichtung beheizt ist, um zu verhindern, daß die Außenhaut der zum Preßwerkzeug geführten Portionen abkühlt und dann beim Verpressen unterschiedliche Fließeigenschaften des zu verpressenden Kunststoffs entstehen. Insbesondere durch die Aufrechterhaltung der Oberflächentemperatur der Kunststoffportionen wird eine wesentliche Verbesserung der Qualität der hergestellten Stoffteile erreicht, sowohl bezüglich Festigkeit als auch bezüglich Maßhaltigkeit.

Besonders effektiv kann die Zwischenspeicher-Transportvorrichtung über vorzugsweise auf die portionierte Preßmasse gerichtete Strahler, vorzugsweise Infrarotstrahler, beheizt sein. Zusätzlich kann der Zwischenspeicher und/oder eine besondere Transportvorrichtung über elektrisch beheizte Drähte und/oder Bänder, vorzugsweise thermostatgesteuert, beheizbar sein. Zusätzlich kann auch der Austrittskanal auf einer konstanten Temperatur gehalten beheizt sein.

Besonders variabel und anpaßbar kann der Zwischenspeicher aus einzelnen, etwa zylindrischen Behältern bestehen, die innen mit einer Antihaftschicht, vorzugsweise aus Teflon, versehen sind.

Handhabungsmäßig besonders einfach können die einzelnen Behälter einen nach unten öffenbaren Boden aufweisen, und es kann als Transportvorrichtung ein unter den zugeordneten Behälter durchlaufendes Transportband dienen, das bis über das Preßwerkzeug geführt sein kann. Dieses Transportband kann zur Verhinderung eines Verklebens des Kunststoffs ebenfalls mit einer Antihaftschicht versehen sein.

Die exakte Endlage des Transportbands über dem offenen Preßwerkzeug ist vorteilhafterweise einstellbar. Mindestens der Endbereich des ggf. mehrteiligen Transportbands kann nach der Beschickung zurückziehbar ausgebildet und/oder zur Beschickung des Preßwerkzeugs an anderer Stelle verschiebbar gebildet sein. Die Kunststoffportionen können so zur Optimierung des Preßvorgangs an bestimmter oder bestimmten Stellen des Preßwerkzeugs lagegenau zugeführt werden und es können so auch Preßwerkzeuge mit mehreren Einzelformen optimal beschickt werden.

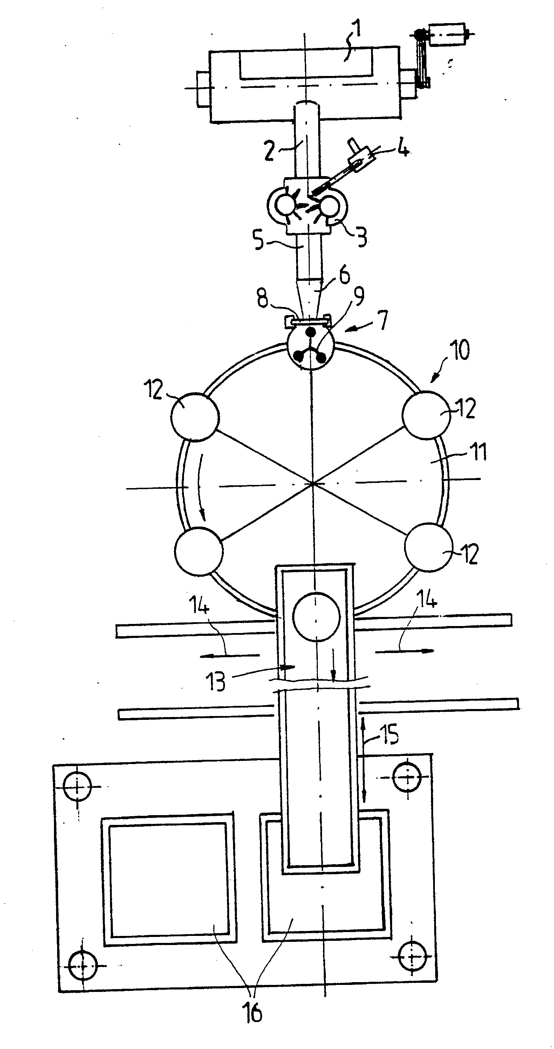

Weitere erfindungsgemäße Ausbildungen sind den Unteransprüchen zu entnehmen und werden mit Ihren Vorteilen anhand der beigefügten Zeichnung in der nachstehenden Beschreibung näher erläutert. Die beigefügte schematische Zeichnung zeigt ein Ausführungsbeispiel einer Vorrichtung.

Die Vorrichtung weist einen Extruder 1 auf, dessen beheizter Austritt 2 mit einer Extrusionszahnradpumpe 3 verbunden ist. Integriert in der Extrusionszahnradpumpe 3 ist eine Vakuumentgasung 4. Durch die Extrusionszahnradpumpe 3 wird das aus Thermoplasten und Duroplasten bestehende Kunststoffgemisch innig vermischt in kontinuierlichem Strom einem elektrisch beheizten Austrittskanal 5 zugeführt, an dessen Ende eine Konusdüse 6 in einer Dosiereinrichtung 7 mündet, die aus einer Schneidevorrichtung 8 und einer Dreizellen-Integral-Wiegeeinrichtung 9 mit Nullsetzautomatik besteht.

Unterhalb der Dosiereinrichtung 7 ist eine Zwischenspeicher-Transportvorrichtung 10 angeordnet, die einen Drehtisch 11 mit einzelnen im Kreis angeordneten Behältern 12 aufweist. Der Drehtisch 11 wird über einen nicht dargestellten elektronisch gesteuerten Getriebemotor angetrieben.

Die einzelnen Behälter 12 sind mit elektrischen Heizbändern beheizt und auf konstante Temperatur eingeregelt, so daß der von der Dosiereinrichtung 7 portionierte Kunststoff auf konstanter Temperatur gehalten ist. Durch Strahler, insbesondere Infrarot-Strahler kann auch sichergestellt werden, daß die Oberflächentemperatur der Kunststoffportionen konstant hoch bleibt, so daß keine Oberflächenabkühlung stattfinden kann, die zur Hautbildung führt und eine gute Ausformung verhindert.

Die Behälter 12 haben einen unten öffenbaren Boden, durch den die Kunststoffportionen nach unten ausgeworfen werden können. Der Dosiereinrichtung 7 etwa gegenüberliegend ist unterhalb dem Drehtisch 11 ein Transportband 13 angeordnet, das in Richtung der Pfeile 14,15 verschiebbar bis über das geöffnete Preßwerkzeug 16 bringbar ist.

Das Transportband 13 ist soweit wie möglich verkleidet, so daß eine Wärmeabstrahlung der transportierten Kunststoffportionen verhindert wird. Eine Abkühlung kann auch dadurch verhindert werden, daß durch Strahler, insbesondere nicht dargestellte Infrarotstrahler, die Temperatur im Bereich des Transportbandes 13 hoch gehalten und ggf. über Sensoren konstant gehalten wird.

Die beschriebene Vorrichtung funktioniert wie folgt: Der zu verarbeitende Kunststoff, ein Gemisch aus unsortierten nicht sortenreinen Kunststoffen von Thermoplasten als Bindemittel und Duroplasten, das zur Rieselfähigkeit zerkleinert ist, wird dem Extruder 1 zugeführt, dort unter Erwärmung innig vermischt, über den Austritt 2 der Extrusionszahnradpumpe 3 zugeführt, in der es nochmals weiter innig vermischt und homogenisiert über eine Vakuumentgasung 4 entgast wird und dann in kontinuierlichem Strom dem beheizten Austrittskanal 5 über eine Konusdüse 6 der Dosiereinrichtung 7 zugeführt wird. Durch die Schneideinrichtung 8 wird die heiße, breiförmige Kunststoffmasse geschnitten, wobei zuerst eine relativ große Portion abgeschnitten und dann elektronisch durch die Wiegeeinrichtung 9 gesteuert kleine Portionen abgeschnitten werden, bis das gewünschte Soll-Gewicht im Behälter 12 erreicht wird. In den Behältern 12 werden die Portionen zwischengespeichert, wobei die Anzahl der Behälter 12 zweckentsprechend gewählt sein kann. Je nach Bedarf werden nun über das Transportband 13 die erforderliche Anzahl Portionen ggf. am mehrteiligen Preßwerkzeug 16 lagegenau zugeführt und nach dem Zurückziehen des Transportbandes 13 wird das Preßwerkzeug geschlossen und so der dosiert zugeführte Kunststoff zum Endprodukt zerpreßt.

## Ansprüche

1. Verfahren zur Verarbeitung von unsortierten nicht sortenreinen Kunststoffen unter Verwendung von Thermoplasten als Bindemittel und Duroplasten, die zur Rieselfähigkeit zerkleinert einem Extruder (1,3) zugeführt, unter Erwärmung innig vermischt extrudiert, in abgemessenen Portionen einem Preßwerkzeug (16) zugeführt werden, **dadurch gekennzeichnet**, daß die zerkleinerten Thermoplaste und Duroplaste in einem vorgegebenen Mischungsverhältnis dem Extruder (1) in Form einer ggf. zusätzlichen Extrusions-Zahnrädpumpe (3) zugeführt, dort unter Erwärmung innig gemischt unter Vakuumentgasung impulsfrei kontinuierlich durch einen beheizten Austrittskanal (5) über eine Querschnittverengung, vorzugsweise in Form einer Konusdüse (6) in laminarem Strom der Dosiervorrichtung (7) zugeführt und portioniert werden und die Portionen über eine mehrere Portionen aufnehmende und warmhaltende Zwischenspeicher-Transportvorrichtung (10) dem Preßwerkzeug (16) portionenweise zugeführt werden.

2. Vorrichtung zur Durchführung des Verfahrens nach Anspruch (1), dadurch gekennzeichnet, daß als Extruder oder zusätzlich zum Extruder (1) eine Extrusionszahnradpumpe (3) vorgesehen ist, daß im Bereich. dieser Extrusionszahnradpumpe (3) eine Vakuumentgasung (4) vorgeschaltet, integriert oder nachgeschaltet ist, daß der Extrusionzahnradpumpe (3) ein beheizter Austrittskanal (5) und eine Konusdüse (6) eine Dosiereinrichtung (7) und eine Zwischenspeicher- Transportvorrichtung (10) nachgeordnet ist, wobei auch die Zwischenspeicher-Transportvorrichtung (10) beheizt ist.

3. Vorrichtung nach Anspruch 2, dadurch gekennzeichnet, daß die Zwischenspeicher - Transportvorrichtung (10) über vorzugsweise auf die positionierte Preßmasse gerichtete Strahler, vorzugsweise Infrarotstrahler beheizt ist.

4. Vorrichtung nach Anspruch 2 oder 3, dadurch gekennzeichnet, daß der Zwischenspeicher und/oder eine besondere Transportvorrichtung über elektrisch beheizte Drähte und/oder -bänder, vorzugsweise thermostatgesteuert beheizbar ist.

5. Vorrichtung nach Anspruch 2 oder 3, dadurch gekennzeichnet, daß der Austrittskanal (2,5) auf einer konstanten Temperatur gehalten ist.

6. Vorrichtung nach einem der Ansprüche 2 bis 5, dadurch gekennzeichnet, daß die Länge des Autrittskanals (5) etwa 800 bis 1000 mm beträgt.

7. Vorrichtung nach Anspruch 2, dadurch gekennzeichnet, daß die Zwischenspeicher- Transportvorrichtung (10) einzelne zylindrische Behälter aufweist, die innen mit einer Antihaftschicht, vorzugsweise aus Teflon, versehen sind.

8. Vorrichtung nach Anspruch 7, dadurch gekennzeichnet, daß die einzelnen Behälter einen nach unten öffenbaren Boden aufweisen und daß unter diesem ein Transportband (13) vorgesehen ist, das bis zum Preßwerkzeug (16) geführt ist.

9. Vorrichtung nach Anspruch 8, dadurch gekennzeichnet, daß das Transportband (13) ebenfalls mit einer Antihaftschicht versehen ist.

10. Vorrichtung nach Anspruch 8, dadurch gekennzeichnet, daß die exakte Endlage des Transportbands (13) über dem offenen Preßwerkzeug (16) einstellbar ist, und daß mindestens der Endbereich des ggf. mehrteiligen Transportbands (13) nach der Beschickung zurückziehbar ausgebildet ist und/oder zur gezielten Beschickung des Presswerkzeugs verschiebbar ausgebildet ist.

11. Vorrichtung nach einem der Ansprüche 8 bis 10, dadurch gekennzeichnet, daß das Transportband (13) mindestens in zwei Richtungen (Pfeile 14,15) verschiebbar angeordnet ist.

12. Vorrichtung nach einem der Ansprüche 8 bis 11, dadurch gekennzeichnet, daß das Transportband gegen Wärmeabstrahlung ummantelt und ggf. beheizbar, insbesondere durch Infrarotstrahler, ausgebildet ist.